(19) **Europäisches Patentamt**
**European Patent Office**
**Office européen des brevets**

(11) **EP 4 331 831 A1**

(12) **EUROPEAN PATENT APPLICATION**
published in accordance with Art. 153(4) EPC

(43) Date of publication:
06.03.2024 Bulletin 2024/10

(21) Application number: 22795869.1

(22) Date of filing: 27.04.2022

(51) International Patent Classification (IPC):
*B32B 5/18* (2006.01)     *C08J 9/236* (2006.01)
*C08J 9/42* (2006.01)

(52) Cooperative Patent Classification (CPC):
**B32B 5/18; C08J 9/236; C08J 9/42**

(86) International application number:
**PCT/JP2022/019151**

(87) International publication number:
**WO 2022/230956 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 30.04.2021 JP 2021077375

(71) Applicant: Kaneka Corporation
Osaka-shi, Osaka 530-8288 (JP)

(72) Inventors:
• YOSHIDA, Takuma
  Settsu-shi, Osaka 566-0072 (JP)
• NEIWA, Yuki
  Settsu-shi, Osaka 566-0072 (JP)
• NISHIMOTO, Yutaka
  Settsu-shi, Osaka 566-0072 (JP)
• TANAKA, Katsuyuki
  Takasago-shi, Hyogo 676-8688 (JP)

(74) Representative: Vossius & Partner
Patentanwälte Rechtsanwälte mbB
Siebertstrasse 3
81675 München (DE)

(54) **FIRE-RESISTANT ARTICLE**

(57)     An object of the present invention is to provide a novel flame retardant article having excellent flame retardancy. Provided is a flame retardant article, in which a cured resin member that is obtained by curing a thermosetting resin composition containing a thermosetting resin and that forms an oxygen insulating carbonized layer when being burned is present in at least part of a surface of an expanded member obtained by expanding a thermoplastic resin composition containing a thermoplastic resin that generates a residue when heated to 600°C at a temperature increase rate of 10°C/minute under a nitrogen atmosphere.

EP 4 331 831 A1

**Description**

Technical Field

The present invention relates to a flame retardant article.

Background Art

As heat insulating materials, there are organic heat insulating materials and inorganic heat insulating materials. In view of light weight and excellent heat insulating property, the organic heat insulating materials are more preferred. Among the organic heat insulating materials, expanded plastic (thermoplastic resin expanded member) is particularly in demand because of its excellent lightweight property and workability. Meanwhile, the expanded plastic also has characteristics of being possible to catch fire and spread by contact with flame at the time of occurrence of a fire and/or a welding process.

Currently, expanded plastic heat insulating materials that can prevent or delay spread of fire by high flame blocking property and flame retardancy are demanded, and technological development of such an expanded plastic heat insulating material is actively underway.

For example, Patent Literature 1 discloses a technique in which pre-expanded beads are mixed with a phenol resin containing boric acid and aluminum hydroxide, and thus coated beads are obtained which have surfaces each coated with a coating layer containing the boric acid, the aluminum hydroxide, and the phenol resin.

Patent Literature 2 discloses a technique in which a primary coating layer constituted by a non-boric acid-based flame retardant and a curing agent-added resol resin is formed on each surface of expanded resin beads, a secondary coating layer that is constituted by a curing agent-added resol resin and that has a thickness smaller than that of the primary coating layer is formed on the surface of the primary coating layer, and thus coated beads for a flame blocking heat insulating material are obtained.

Patent Literature 3 discloses a material for a vibration absorption structure which is constituted by a flammable expanded resin in which an expansion degree of an expanded resin is larger than 66% and smaller than 100% of a volume at the time of non-pressurized expansion, in which the flammable expanded resin is separated by a nonflammable partition that is constituted by a flame retardant resin and nonflammable fine particles and that has fine gaps.

Citation List

[Patent Literature]

[Patent Literature 1]
PCT international application publication, No. WO2006-043435
[Patent Literature 2]
Japanese Patent Application Publication Tokukai No. 2008-120984
[Patent Literature 3]
Japanese Patent No. 6135951

Summary of Invention

Technical Problem

However, the conventional technique as described above is not sufficient in view of flame retardancy, and has room for further improvements.

An embodiment of the present invention is accomplished in view of the above problem, and an object thereof is to provide a novel flame retardant article having excellent flame retardancy.

Solution to Problem

The inventors of the present invention have diligently studied in order to attain the object. As a result, the inventors of the present invention have found that the object can be attained by obtaining an expanded member by expanding a composition containing a thermoplastic resin that is not burned out when being burned in a particular high-temperature environment, and causing a cured resin member which can form an oxygen insulating carbonized layer when being burned to be present in at least a part of a surface of the expanded member, and have completed the present invention.

That is, a flame retardant article in accordance with an embodiment of the present invention includes: an expanded member which is obtained by expanding a thermoplastic resin composition containing a thermoplastic resin; and a cured resin member which is obtained by curing a thermosetting resin composition containing a thermosetting resin, the thermoplastic resin generating a residue when being heated from 35°C to 600°C at a temperature increase rate of 10°C/minute under a nitrogen atmosphere, the cured resin member forming an oxygen insulating carbonized layer when being burned, and the cured resin member being present in at least part of a surface of the expanded member.

Advantageous Effects of Invention

An embodiment of the present invention brings about an effect of making it possible to provide a flame retardant article having excellent flame retardancy.

Description of Embodiments

The following description will discuss embodiments of the present invention. The present invention is not, however, limited to these embodiments. The present invention is not limited to the features described below, and may be altered in various ways within the scope of the claims. The present invention also encompasses, in its technical scope, any embodiment or example derived by combining technical means disclosed in differing embodiments or examples. Furthermore, it is possible to form a new technical feature by combining technical means disclosed in differing embodiments. All academic and patent literatures cited herein are incorporated herein by reference. Any numerical range expressed as "A to B" herein means "not less than A and not more than B (i.e., a range from A to B which includes both A and B)" unless otherwise stated.

A copolymer containing, as structural units, a structural unit derived from an $X^1$ monomer, a structural unit derived from an $X^2$ monomer, ... , and an $X^n$ monomer (n is an integer of 2 or more) is also referred to as "$X^1/X^2/ ... /X^n$ copolymer", unless otherwise stated herein. Such an $X^1/X^2/ ... /X^n$ copolymer is not particularly limited as to the manner in which the structural units of the copolymer are arranged, unless otherwise stated, and may be a random copolymer, a block copolymer, or a graft copolymer.

[1. Technical idea of an embodiment of the present invention]

As one of indices of flame retardancy of a certain article, there is an evaluation standard of nonflammable materials and the like according to the Building Standards Act in Japan. In order for a certain article to be certified as a nonflammable material as a building material in Japan, it is necessary to meet a certain criterion in a test carried out according to a cone calorimeter method at the General Building Research Corporation of Japan, which is a public institution provided for in Article 108(2) of the Order for Enforcement of the Building Standards Act. In order for a certain article to be certified as a nonflammable material, specifically, it is necessary to meet the condition that a gross calorific value is 8 MJ/m$^2$ or less when the article is heated at a radiant heat intensity of 50 kW/m$^2$ for 20 minutes according to a method in conformity to ISO5660-1:2002.

The beads disclosed in Patent Literatures 1 and 2 can meet the above-described criterion if the beads are used in a composite material of the beads and an aluminum member such as an aluminum plate. However, the beads themselves cannot meet the above-described criterion and are not an article that can be certified as a nonflammable material. That is, the techniques disclosed in Patent Literatures 1 and 2 have room for further improvements in view of flame retardancy.

Under the circumstances, the inventors of the present invention have conducted diligent studies in order to provide an article having excellent flame retardancy, specifically, a novel article that can be certified as a nonflammable material by meeting the above-described criterion by itself without including an aluminum member as a constituent element.

As a result of the diligent studies, the inventors of the present invention have newly found the following points, and accomplished the present invention: The above-described criterion is met by a flame retardant article which is obtained by: using a thermoplastic resin which generates a residue when the thermoplastic resin is heated from 35°C to 600°C at a temperature increase rate of 10°C/minute under a nitrogen atmosphere; using a cured resin member which forms an oxygen insulating carbonized layer when being burned; and causing the cured resin member to be present in at least part of a surface of an expanded member which is obtained by expanding a composition containing the thermoplastic resin.

Although a reason why the above-described flame retardant article can meet the above-described criterion is unclear, it is inferred as follows: At the time of burning, first, the cured resin member is carbonized quickly to form a carbonized layer. The carbonized layer has oxygen insulating property. Therefore, the carbonized layer can play a role of an oxygen insulating layer so that the expanded member is not exposed to oxygen. As a result, the expanded member is exposed to high temperature under an oxygen-insulated state or under a low oxygen condition. An expanded member such as general styrene foam is lost due to generation of a flammable low molecular weight compound by thermolysis from a base resin in an environment of being exposed to high temperature. Meanwhile, generation of the low molecular weight compound can be inhibited by including a thermoplastic resin which generates the above-described residue in the expanded member. This reduces a calorific value and generates remains of a fire even under high temperature burning. As a result, the flame retardant article does not catch fire even in a case of burning where the flame retardant article continues to be exposed to an ignition source and high temperature, and the flame retardant article can reduce a calorific value. From this fact, the flame retardant article can satisfy the criterion as a nonflammable material according to the Building Standards Act.

[2. Flame retardant article]

A flame retardant article in accordance with an embodiment of the present invention includes: an expanded member which is obtained by expanding a thermoplastic resin composition containing a thermoplastic resin; and a cured resin member which is obtained by curing a thermosetting resin composition containing a thermosetting resin, the thermoplastic resin generating a residue when being heated from 35°C to 600°C at a temperature increase rate of 10°C/minute under a nitrogen atmosphere, the cured resin member forming an oxygen insulating carbonized layer when being burned, and the cured resin member being present in at least part of a surface of the expanded member.

In this specification, the "flame retardant article in accordance with an embodiment of the present invention" may also be referred to as a "present flame retardant article". In this specification, "heating from 35°C to 600°C at a temperature increase rate of 10°C/minute under a nitrogen atmosphere" is sometimes referred to as "carrying out a thermoanalytical evaluation test". In this specification, when simply stating a "residue", the "residue" is intended to be a "residue at the time of heating from 35°C to 600°C at a temperature increase rate of 10°C/minute under a nitrogen atmosphere", in other words, a "carbide obtained when a thermoanalytical evaluation test is carried out". In this specification, when simply stating a "gross calorific value", the "gross calorific value" is intended to mean a "gross calorific value obtained when an article is heated at a radiant heat intensity of 50 kW/m$^2$ for 20 minutes according to the method in conformity to ISO5660-1:2002".

The present flame retardant article has, by itself, a gross calorific value of preferably 8.00 MJ/m$^2$ or less, more preferably 7.70 MJ/m$^2$ or less, further preferably 7.60 MJ/m$^2$ or less, still further preferably 7.50 MJ/m$^2$ or less, particularly preferably 7.40 MJ/m$^2$ or less, most preferably 7.30 MJ/m$^2$ or less. The present flame retardant article brings about an advantage of meeting an accreditation criterion as a nonflammable material according to the Building Standards Act by itself, without including, as a constituent element, a nonflammable surface material such as a metal foil. This makes it possible to provide a flame retardant article having excellent lightweight property at low cost.

As described above, an embodiment of the present invention also brings about an advantage of providing safe and inexpensive housing. Accordingly, an embodiment of the present invention also brings about an advantage of contributing to achievement of sustainable development goals (SDGs).

(2-1. Expanded member)

The expanded member is obtained by expanding a thermoplastic resin composition containing a thermoplastic resin. A method for producing an expanded member, that is, a method for expanding a thermoplastic resin composition will be described later.

(Thermoplastic resin composition)

As long as the thermoplastic resin composition contains a thermoplastic resin, the other feature is not particularly limited. The thermoplastic resin composition may contain, in addition to the thermoplastic resin, (a) a blowing agent for expanding the thermoplastic resin composition, and (b) another component such as a processing aid.

(Thermoplastic resin)

The thermoplastic resin can also be said to be a resin that substantially constitutes an expanded member. As long as the thermoplastic resin generates a residue, the other feature is not particularly limited. Note that "generating a residue" is intended to mean that "a carbide remains when a thermoanalytical evaluation test is carried out".

The thermoplastic resin generating a residue includes a vinyl halide-based resin and an acrylonitrile-based resin.

Examples of the vinyl halide-based resin include, but not particularly limited to: (a) a homopolymer constituted by any one monomer selected from the group consisting of fluorine-based vinyl monomers, bromine-based vinyl monomers, chlorine-based vinyl monomers, iodine-based vinyl monomers, and the like; (b) a copolymer constituted by one or more monomers selected from the above group and one or more other monomers; and (c) a (co)polymer obtained by post-halogenation (e.g., post-chlorination). The vinyl halide-based resin is more preferably a vinyl chloride-based resin. According to the configuration, it is possible to bring about advantages of (a) having excellent thermal stability during resin processing (during expanded member production) and (b) further inhibiting release of a flammable low molecular weight compound by thermolysis from the expanded member during high-temperature heating under an oxygen-insulated state, and consequently further reducing a gross calorific value of an obtained flame retardant article. In this specification, the "flammable low molecular weight compound" is sometimes referred to as a "flammable gas".

Examples of the vinyl chloride-based resin used in the present invention include, but not particularly limited to: polyvinyl chloride (vinyl chloride homopolymer); vinyl chloride-based copolymers of vinyl chloride and another monomer copolymerizable with the vinyl chloride, such as a vinyl chloride/vinyl acetate copolymer, a vinyl chloride/(meth)acrylic acid copolymer, a vinyl chloride/methyl (meth)acrylate copolymer, a vinyl chloride/ethyl (meth)acrylate copolymer, a vinyl chloride/maleic acid ester copolymer, a vinyl chloride/ethylene copolymer, a vinyl chloride/propylene copolymer, a vinyl chloride/styrene copolymer, a vinyl chloride/isobutylene copolymer, a vinyl chloride/vinylidene chloride copolymer, a vinyl chloride/styrene/maleic anhydride terpolymer, a vinyl chloride/styrene/acrylonitrile terpolymer, a vinyl chloride/butadiene copolymer, a vinyl chloride/isoprene copolymer, a vinyl chloride/chlorinated propylene copolymer, a vinyl chloride/vinylidene chloride/vinyl acetate terpolymer, a vinyl chloride/acrylonitrile copolymer, and a copolymer of vinyl chloride and any of various vinyl ethers; a vinylidene chloride-based polymer; polyvinyl chlorides such as a post-chlorinated vinyl-based copolymer; products (e.g., a chlorinated vinyl chloride-based polymer) obtained by modification (e.g., chlorination) of a vinyl chloride-based polymer such as post-chlorinated polyvinyl chloride and a post-chlorinated vinyl chloride-based copolymer (hereinafter polyvinyl chloride and a polyvinyl chloride-based copolymer may be collectively referred to as a "vinyl chloride-based polymer"); products obtained by modification (e.g., chlorination) of a vinylidene chloride-based polymer such as a post-chlorinated vinylidene chloride-based polymer; and the like. Further, it is possible to use chlorinated polyolefins (such as chlorinated polyethylene) each having a chemical structure similar to that of polyvinyl chloride, and a product obtained by modification (e.g., chlorination) of the chlorinated olefin. Among these, in view of flame retardancy, the vinyl chloride-based resin is preferably at least one selected from the group consisting of vinyl chloride-based polymers, chlorinated vinyl chloride-based polymers, and vinylidene chloride-based polymers. Among these, a chlorinated vinyl chloride-based polymer is particularly preferable in view of excellent flame retardancy and expandability. One of the types of vinyl chloride-based resins may be used solely, or two or more of the types of vinyl chloride-based resins may be used in combination. In this specification, a "vinyl chloride-based polymer" means a polyvinyl chloride and/or a vinyl chloride-based copolymer. In this specification, the chlorinated vinyl chloride-based polymer is sometimes referred to as a chlorinated vinyl chloride-based resin.

An average polymerization degree of the vinyl halide-based resin is not particularly limited. A lower limit of the average polymerization degree is preferably not less than 300, and more preferably not less than 400. An upper limit of the average polymerization degree is preferably not more than 3000, and more preferably not more than 1500. In a case where the average polymerization degree of the vinyl halide-based resin falls within the above-described range, expanded particles having a high expansion ratio are more likely to be obtained by using a thermoplastic resin composition containing the vinyl halide-based resin. Note that the average polymerization degree of the vinyl halide-based resin which has been halogenated (e.g., chlorinated vinyl chloride-based resin) is considered to be substantially the same as the average polymerization degree of the vinyl halide-based resin before halogenation (e.g., vinyl chloride-based resin before chlorination). The average polymerization degree of the vinyl halide-based resin is measured in conformity to JIS K 6720-2.

Here, the chlorinated vinyl chloride-based resin is usually produced, with use of a vinyl chloride-based resin as a raw material, by a method such as the following methods (a) and (b): (a) A method in which the vinyl chloride-based resin is chlorinated in an aqueous medium by, for example, in a state in which the vinyl chloride-based resin is dispersed in the aqueous medium, supplying chlorine into the aqueous medium, and then (i) subjecting an obtained mixture to photochlorination by irradiating the obtained mixture with a mercury lamp or (ii) subjecting the obtained mixture to thermochlorination; and (b) A method in which the vinyl chloride-based resin is chlorinated in an air layer by, for example, chlorinating the vinyl chloride-based resin in the air layer under irradiation with a mercury lamp.

A chlorine content in the vinyl chloride-based resin is preferably not less than 50% by weight and not more than 75% by weight, more preferably not less than 60% by weight and not more than 75% by weight, and more preferably not less than 64% by weight and not more than 70% by weight. For the vinyl chloride-based resin, as the chlorine content increases, the residue ratio becomes higher, and a flammable gas is produced less during high-temperature heating under an oxygen-insulated state. As a result, it is possible to reduce a gross calorific value of an obtained flame retardant article. Meanwhile, in a case where the chlorine content in the vinyl chloride-based resin is not more than 75% by weight, melt viscosity of a thermoplastic resin composition containing such a resin does not become excessively high. Therefore, there is a tendency for better processing property when the thermoplastic resin composition containing such a resin is extruded. In this specification, the chlorine content of the vinyl chloride-based resin is measured in conformity to JIS K7385 B method. The "residue ratio" will be described later.

In the vinyl halide-based resin, a proportion in which hydrogen bonded to a main chain is substituted by a halogen atom is defined as a hydrogen substitution ratio. The hydrogen substitution ratio is preferably 0.25 or more and 0.55 or less. As the hydrogen substitution ratio of the vinyl halide-based resin increases, the residue ratio of the vinyl halide-based resin becomes higher, and a flammable gas is produced less. As a result, it is possible to reduce a gross calorific value of an obtained flame retardant article. Meanwhile, in a case where the hydrogen substitution ratio is 0.55 or less, melt viscosity of a thermoplastic resin composition containing the vinyl halide-based resin is not excessively high. Therefore, there is a tendency for better processing property when the thermoplastic resin composition containing the vinyl halide-based resin is extruded.

In this specification, an "acrylonitrile-based resin" is intended to mean a resin which contains structural units derived from acrylonitrile in a proportion of 50 mol% or more with respect to 100 mol% of all structural units. The acrylonitrile-based resin is preferably (a) polyacrylonitrile which is a homopolymer constituted by acrylonitrile and (b) a copolymer of acrylonitrile with a monomer other than acrylonitrile, in which a structural unit derived from acrylonitrile is a main component. The acrylonitrile-based resin is more preferably polyacrylonitrile. According to the configuration, it is possible to bring about advantages of further inhibiting release of a flammable gas from the expanded member during high-temperature heating under an oxygen-insulated state, and consequently further reducing a gross calorific value of an obtained flame retardant article. An amount of the structural unit derived from acrylonitrile in the acrylonitrile-based resin may be 60 mol% or more, 70 mol% or more, 80 mol% or more, or 90 mol% or more, in 100 mol% of all structural units.

The thermoplastic resin preferably contains a vinyl halide-based resin and/or an acrylonitrile-based resin, and more preferably contains a vinyl halide-based resin. According to the configuration, it is possible to bring about advantages that release of a flammable gas from the thermoplastic resin is not likely to occur during high-temperature heating under an oxygen-insulated state, and consequently it is possible to reduce a gross calorific value of an obtained flame retardant article. The thermoplastic resin preferably contains one or more selected from the group consisting of vinyl chloride-based resins, chlorinated vinyl chloride-based resins, vinylidene chloride-based resins, and polyacrylonitrile, more preferably contains a vinyl chloride-based resin and/or a chlorinated vinyl chloride-based resin, and further preferably contains a chlorinated vinyl chloride-based resin. According to the configuration, it is possible to bring about advantages of further inhibiting release of a flammable gas from the expanded member during high-temperature heating under an oxygen-insulated state, and consequently further reducing a gross calorific value of an obtained flame retardant article.

A total amount of the vinyl halide-based resin and the acrylonitrile-based resin relative to 100% by weight of the thermoplastic resin is preferably not less than 50% by weight, more preferably not less than 65% by weight, more preferably not less than 80% by weight, and further preferably not less than 95% by weight. A total amount of the vinyl halide-based resin and the acrylonitrile-based resin relative to 100% by weight of the thermoplastic resin may be 100% by weight, that is, the thermoplastic resin may be constituted only by a vinyl halide-based resin and/or an acrylonitrile-based resin. In a case where the total amount of the vinyl halide-based resin and the acrylonitrile-based resin in the thermoplastic resin falls within the above-described range, it is possible to bring about advantages that release of a flammable gas from the thermoplastic resin is not likely to occur during high-temperature heating under an oxygen-insulated state, and consequently it is possible to reduce a gross calorific value of an obtained flame retardant article.

A total amount of the vinyl chloride-based resin, the chlorinated vinyl chloride-based resin, the vinylidene chloride-based resin, and the polyacrylonitrile relative to 100% by weight of the thermoplastic resin is preferably not less than 50% by weight, more preferably not less than 65% by weight, more preferably not less than 80% by weight, and further preferably not less than 95% by weight. A total amount of the vinyl chloride-based resin, the chlorinated vinyl chloride-based resin, the vinylidene chloride-based resin, and the polyacrylonitrile relative to 100% by weight of the thermoplastic resin may be 100% by weight, that is, the thermoplastic resin may be constituted only by the vinyl chloride-based resin, the chlorinated vinyl chloride-based resin, the vinylidene chloride-based resin, and/or the polyacrylonitrile. In a case where the total amount of the vinyl chloride-based resin, the chlorinated vinyl chloride-based resin, the vinylidene chloride-based resin, and the polyacrylonitrile in the thermoplastic resin falls within the above-described range, it is possible to bring about advantages of further inhibiting release of a flammable gas from the expanded member during high-temperature heating under an oxygen-insulated state, and consequently further reducing a gross calorific value of an obtained flame retardant article.

(Residue)

The thermoplastic resin generates a residue when the thermoplastic resin is heated from 35°C to 600°C at a temperature increase rate of 10°C/minute under a nitrogen atmosphere. The residue refers to a carbide that remains when the thermoplastic resin is heated from 35°C to 600°C at a temperature increase rate of 10°C/minute under a nitrogen atmosphere and the thermoplastic resin is not completely decomposed by heat. This intends that the thermoplastic resin releases little flammable gas by thermolysis during high-temperature heating under an oxygen-insulated state. An amount of the thermoplastic resin that is not completely decomposed by heat and remains as a carbide when the thermoplastic resin is heated from 35°C to 600°C at a temperature increase rate of 10°C/minute under a nitrogen atmosphere is preferably as large as possible because a flame retardant article is to have excellent nonflammability.

The residue of the thermoplastic resin can be expressed by a residue ratio obtained when the thermoplastic resin is heated from 35°C to 600°C at a temperature increase rate of 10°C/minute, and "generating a residue" can be rephrased as follows: the residue ratio exceeds 0%. The residue ratio (%) is greater than 0%, preferably 2% or more, more preferably 5% or more, more preferably 10% or more, further preferably 15% or more, still further preferably 17% or more, and particularly preferably 20% or more. According to the configuration, it is possible to bring about advantages of further inhibiting release of a flammable gas from the expanded member during high-temperature heating under an oxygen-insulated state, and consequently further reducing a gross calorific value of an obtained flame retardant article to achieve nonflammable property.

The residue ratio of the thermoplastic resin is a residue ratio obtained when a thermoanalytical evaluation test is carried out, and is calculated from an amount of change between a weight of the thermoplastic resin before the thermoanalytical evaluation test and a weight of the thermoplastic resin after the thermoanalytical evaluation test. The thermoanalytical evaluation test can be carried out by, for example, the following method with use of a simultaneous thermogravimetry/differential thermal analyzer: (1) measure a weigh of a certain amount of a thermoplastic resin, and define an obtained value as a weight before heating; (2) place the thermoplastic resin after weighing into an aluminum pan; (3) while blowing nitrogen at a flow rate of 100 mL/min into the pan, increase the temperature in the pan from 35°C to 600°C at 10°C/min; (4) after the temperature in the pan reaches 600°C, cool the pan to room temperature, and take out a burned residue from the pan; (5) measure a weight of the burned residue taken out from the pan, and use an obtained value as a weight after heating; and (6) divide the weight after heating by the weight before heating, multiply the obtained value by another 100, and use an obtained value as a residue ratio (%).

A vinyl halide-based resin which has low bond dissociation energy at a side chain and easily forms polyene, and/or an acrylonitrile-based resin in which a main chain is more likely to take a ring structure, have a characteristic of being easily carbonized. These thermoplastic resins release little flammable gas by thermolysis and are more likely to generate residues. For example, polyvinylidene fluoride (vinylidene fluoride homopolymer), which is a kind of a vinyl halide-based resin, has a residue ratio of 34%. Polyvinyl chloride (vinyl chloride homopolymer), which is a vinyl chloride-based resin, has a residue ratio of 17%, polyvinylidene chloride (vinylidene chloride homopolymer) has a residue ratio of 20%, and chlorinated polyvinyl chloride has a residue ratio of 23%. The acrylonitrile-based resin (63% by weight of polyacrylonitrile) has a residue ratio of 44%.

(Blowing agent)

The thermoplastic resin composition may contain a blowing agent for expanding the thermoplastic resin composition.

The blowing agent is not particularly limited, and a known blowing agent can be used. As the blowing agent, for example, (a) physical blowing agents including: (i) hydrocarbons such as normal butane, isobutane, normal pentane, isopentane, neopentane, cyclopentane, normal hexane, and cyclohexane; (ii) ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; (iii) ketones such as dimethyl ketone (acetone), methyl ethyl ketone, diethyl ketone, methyl-n-propyl ketone, methyl-n-butyl ketone, methyl-i-butyl ketone, methyl-n-hexyl ketone, ethyl-n-propyl ketone, and ethyl-n-butyl ketone; (iv) saturated alcohols each having 1 to 4 carbon atom(s), such as methanol, ethanol, propyl alcohol, i-propyl alcohol, butyl alcohol, i-butyl alcohol, and t-butyl alcohol; (v) carboxylic acid esters such as methyl formate, ethyl formate, propyl formate, butyl formate, amyl formate, methyl propionate, and ethyl propionate; (vi) alkyl halides such as methyl chloride and ethyl chloride; (vii) hydrofluoroolefins, such as trans-1,3,3,3-tetrafluoropropene (trans-HFO-1234e), cis-1,3,3,3-tetrafluoropropene (cis-HFO-1234ze), 2,3,3,3-tetrafluoropropene (trans-HFO-1234yf), trans-1-chloro-3,3,3-trifluoropropene (trans-HCFO-1233zd), and cis-1-chloro-3,3,3-trifluoropropene (cis-HCFO-1233zd), and chlorinated hydrofluoroolefins; and (viii) inorganic blowing agents such as water, carbon dioxide, and nitrogen and (b) chemical blowing agents such as an azo compound and tetrazole can be used. One of these blowing agents can be used solely. Alternatively, two or more of these blowing agents can be used in combination.

A contained amount of the blowing agent in the thermoplastic resin composition is not particularly limited, and may be set as appropriate according to a type of thermoplastic resin to be used, an intended expansion ratio, and the like.

(Other components)

The thermoplastic resin composition may contain, in addition to the thermoplastic resin, various other components other than the thermoplastic resin and the blowing agent, as necessary within a range that does not impair the effects of an embodiment of the present invention. Examples of those other components include a processing aid, a flame retardant, a stabilizer, a lubricant, a nucleating agent, an expansion aid, an antistatic agent, a radiative heat transfer inhibitor, a plasticizing agent, a solvent, a colorant (pigment and dye), a weather resistant agent, and the like.

(Processing aid)

In an embodiment of the present invention, it is possible to use (a) a copolymer having a structural unit derived from an aromatic vinyl monomer and a structural unit derived from an unsaturated nitrile monomer, such as a styrene/acrylonitrile copolymer, (b) an acrylic-based resin, (c) a methyl methacrylate/butadiene/styrene-based polymer, (d) chlorinated polyethylene, and the like. These compounds can each function as a processing aid in a case where a vinyl halide-based resin and/or an acrylonitrile-based resin is used as the thermoplastic resin. The methyl methacrylate/butadiene/styrene-based polymer can function also as an impact resistance improver in a case where a vinyl halide-based resin and/or an acrylonitrile-based resin is used as the thermoplastic resin.

(Stabilizer)

Examples of the stabilizer include (a) a tin-based stabilizer (e.g., a butyl tin mercapto-based stabilizer), (b) an antioxidant such as a phosphorus-based compound and an amine-based compound, (c) an epoxy-based stabilizer, and (d) zeolite.

(Lubricant)

Examples of the lubricant include (a) a wax such as ester wax and polyethylene wax and (b) a fatty acid metal salt such as calcium stearate and zinc stearate.

(Radiative heat transfer inhibitor)

Examples of the radiative heat transfer inhibitor include substances having the property of reflecting, scattering, or absorbing light in a near-infrared or infrared region. Examples of such substances (radiative heat transfer inhibitor) include graphite, graphene, carbon black, expanded graphite, titanium oxide, and aluminum.

Contained amounts of the processing aid, the stabilizer, the lubricant and the radiative heat transfer inhibitor in the thermoplastic resin composition are not particularly limited.

In molding the expanded member, the thermoplastic resin composition may be pelletized. A shape of the pelletized thermoplastic resin composition is not limited to any particular one. The shape of the thermoplastic resin composition is preferably particulate because the particulate form makes it easy to expand the thermoplastic resin composition to produce expanded particles, which are an example of the expanded member. The term "particulate" in this specification includes not only a form of small rounded particles such as spherical particles, substantially spherical particles, convex lens-shaped particles, concave lens-shaped particles, and spindle-shaped particles, but also a form of particles with depressions.

In this specification, the "particulate thermoplastic resin composition" is sometimes referred to as "thermoplastic resin particles". That is, the expanded member is preferably a member obtained by expanding thermoplastic resin particles.

A particle weight of the thermoplastic resin particles is preferably 0.5 mg to 10.0 mg per particle, more preferably 1.0 mg to 8.0 mg per particle, and further preferably 3.0 mg to 7.0 mg per particle. According to the configuration, it is possible to bring about advantages of achieving good filling property of an expanded member (expanded particles) which is obtained by expanding the thermoplastic resin particles into a molding die, and achieving good moldability, such as surface beauty, of a foamed molded product obtained by molding the expanded member (expanded particles).

(Method for preparing thermoplastic resin composition)

The thermoplastic resin composition (e.g., a particulate thermoplastic resin composition) can be prepared by a conventionally known method, and the preparation method is not particularly limited. The following description will discuss an example of a method for preparing a thermoplastic resin composition (in other words, a method for preparing thermoplastic resin particles), with reference to an example case where the thermoplastic resin composition is in the form of particles. A particulate thermoplastic resin composition can be obtained by, for example, a method in which the following steps (a1) through (a4) are sequentially carried out:

(a1) supplying a thermoplastic resin and, if necessary, various other components into an extruder and melting and kneading the supplied raw materials;
(a2) supplying a blowing agent to the extruder or dispersion equipment which is provided downstream from the extruder, and dissolving and dispersing the blowing agent in a melted and kneaded product obtained in (a1);

(a3) extruding the melted and kneaded product through a die attached downstream from the extruder and having one or more small holes into a cutter chamber filled with pressurized circulating water; and

(a4) immediately after the extrusion of the melted and kneaded product, cutting the melted and kneaded product with use of a rotary cutter which is in contact with the die, while cooling the melted and kneaded product by the pressurized circulating water to solidify, so that a particulate thermoplastic resin composition is obtained.

Note that, in step (a3), a region in which the melted and kneaded product is extruded may not be in the cutter chamber filled with pressurized circulating water, and may be in a gas phase (air).

A general extruder can be used as the extruder, and specific examples of the extruder include a single screw extruder, a twin screw extruder, and a tandem extruder. Examples of the tandem extruder include an extruder in which two single screw extruders are connected, and an extruder in which a single screw extruder is connected to a twin screw extruder. Further, the extruder may be used in combination with dispersion equipment such as a static mixer and/or a stirrer having no screw.

(Method for preparing expanded member)

An expanded member can be obtained by expanding a thermoplastic resin composition (e.g., a particulate thermoplastic resin composition) by a conventionally known method. A method for preparing an expanded member, in other words, a method for expanding a thermoplastic resin composition is not particularly limited. For example, a particulate thermoplastic resin composition (thermoplastic resin particles) is expanded by 2 times to 110 times with a heating medium such as heated air and/or steam, and thus an expanded member (expanded particles) can be obtained.

Expanded particles obtained by expanding thermoplastic resin particles are charged into a mold, and then heated with steam (saturated steam, superheated steam, and the like), and thus a foamed molded product is obtained. The foamed molded product is also an expanded member. That is, the form of the expanded member is not particularly limited, and may be particulate (e.g., expanded particles), or may be any form (e.g., foamed molded product), such as a plate shape or a box shape. The expanded member may be a laminate constituted by a plurality of expanded members.

The expanded member is preferably constituted by expanded particles. It is easy to apply the thermosetting resin composition (coating) to the surface of expanded particles. In particular, it is possible to easily apply a thermosetting resin composition (coating) to a most part of the surface of expanded particles. Therefore, it is possible to easily obtain expanded particles (expanded member) in which the cured resin member is present in a most part of the surface. Furthermore, by foam-molding expanded particles (expanded member) in which the thermosetting resin composition has been applied to a most part of the surface, it is possible to easily obtain an foamed molded product (i.e., flame retardant article) in which the cured resin member is present not only in a most part of a surface of the molded product but also inside the molded product. It is possible to employ an aspect in which, by applying and heating the thermosetting resin composition on the surface of the foamed molded product obtained by in-mold foam molding of the expanded particles, the cured resin member is present in the surface. In such a flame retardant article, a carbonized layer can be formed in a most part of the surface of the expanded member when being burned. Therefore, it is possible to exhibit excellent nonflammable property. Note that the case where an expanded member is constituted by expanded particles is intended to mean that the expanded member may be expanded particles themselves or the expanded member may be a foamed molded product obtained by molding expanded particles.

The above descriptions have discussed the method in which a thermoplastic resin composition and an expanded member are prepared separately with separate devices. However, preparation of a thermoplastic resin composition and preparation of an expanded member may be carried out in a continuous device. For example, with a method in which steps (b1) through (b4) below are sequentially carried out, preparation of a thermoplastic resin composition and preparation of an expanded member are successively carried out, and it is thus possible to obtain a sheet-shaped, plate-shaped or film-shaped expanded member (extruded expanded product):

(b1) supplying a thermoplastic resin and, if necessary, various other components into an extruder and melting and kneading the supplied raw materials;

(b2) supplying a blowing agent to the extruder or dispersion equipment which is provided downstream from the extruder, and dissolving and dispersing the blowing agent in a melted and kneaded product obtained in (b1);

(b3) extruding the melted and kneaded product through a die attached downstream from the extruder and having an intended shape to a region of having pressure lower than that in the extruder; and

(b4) by the extrusion of (b3), the melted and kneaded product is expanded to obtain an expanded member (also referred to as an extruded expanded product).

Alternatively, it is possible to obtain an expanded member by known injection molding, heat molding, calendar molding, press molding, or the like.

(2-2. Cured resin member)

The cured resin member is obtained by curing the thermosetting resin composition, and forms an oxygen insulating carbonized layer when being burned. In this specification, the phrase "when being burned" is intended to mean a state where a phenomenon (such as an ordinary fire) has occurred in which oxygen and a substance are combined to generate heat and the like. Examples of such a state include a state (such as burning test) under a condition of being exposed to a high temperature of 600°C or more. In this specification, the "oxygen insulating carbonized layer" is intended to mean a carbonized layer having oxygen insulating property. Whether the carbonized layer has oxygen insulating ability or not can be determined, for example, based on a degree of crack present on a surface of the carbonized layer. In a case where an SEM image is obtained for a surface of a carbonized layer, as the number of cracks and holes with a longitudinal dimension of 100 um or more is smaller in a range of 2000 $\mu$m $\times$ 2000 um in the SEM image, it can be said that the oxygen insulating property is higher. Specifically, SEM images are obtained at respective five arbitrarily selected locations, and the number of cracks and holes having a longitudinal dimension of 100 pm or more is counted in the above-described range. It is preferable that an average number of the five locations is five or less.
In this specification, the "carbonized layer" is intended to mean a layer obtained by carbonization of a cured resin member. That is, a most part of the cured resin member is to be carbonized without being decomposed by heat when being burned.
The cured resin member only needs to be present on at least part of a surface of the expanded member. In a case where the cured resin part is present on at least part of a surface of the expanded member, it is possible to expect the foregoing effect of an embodiment of the present invention. Further, as long as the cured resin member is present on at least part of the surface of the expanded member, the cured resin member may be present inside the expanded member, in other words, the cured resin member may be impregnated into the expanded member.
In an embodiment of the present invention, the cured resin member is preferably present in at least part of a surface of the expanded member corresponding to a surface that can be in contact with oxygen when the flame retardant article is ultimately used (or when the flame retardant article is burned). It is possible to employ an aspect in which the surface of the expanded member is substantially entirely covered with the cured resin member. That is, in an embodiment of the present invention, a surface of the expanded member on which the cured resin member is preferably present or a proportion thereof can be set as appropriate in accordance with an ultimate use situation of the flame retardant article. In an embodiment of the present invention, in a surface (100%) of the expanded member corresponding to a surface that can be in contact with oxygen when the flame retardant article is ultimately used, the cured resin member is present in a proportion of preferably 50% or more, more preferably 60% or more, more preferably 70% or more, further preferably 80% or more, and particularly preferably 90% or more. In a case where the expanded member is expanded particles, in a surface (100%) of the expanded member, the cured resin member is present in a proportion of preferably 50% or more, more preferably 60% or more, more preferably 70% or more, further preferably 80% or more, and particularly preferably 90% or more. In a case where the expanded member is a plate-shaped member, in at least one plate surface (100%) of the expanded member (preferably, all plate surfaces (100%)), the cured resin member is present in a proportion of preferably 50% or more, more preferably 60% or more, more preferably 70% or more, further preferably 80% or more, and particularly preferably 90% or more.
In the present flame retardant article, (a) another member may be present between the expanded member and the cured resin member, and (b) another member may be further present on a surface of the cured resin member present on the surface of the expanded member. The another member is not particularly limited, and may be an inorganic metal such as aluminum, an inorganic salt such as silicate, an organic substance such as plastic, or the like.

(Thermosetting resin composition)

As long as the thermosetting resin composition contains a thermosetting resin, the other feature is not particularly limited. The thermosetting resin composition may contain, in addition to the thermosetting resin, (a) a flame retardant, (b) a phenol-based compound, (c) a curing agent for curing the thermosetting resin composition, and (d) another component such as an antistatic agent.

(Thermosetting resin)

The thermosetting resin is not limited to any particular one. Examples of the thermosetting resin include a phenol resin, an epoxy resin, polyurethane, unsaturated polyester, a urea resin, a melamine resin, a guanamine resin, a silicone resin, a polyimide resin, a polyamide imide resin, a silicon resin, a diallyl phthalate resin, and the like.
The thermosetting resin preferably contains one or more selected from the group consisting of phenol resins, epoxy resins, and polyurethane, and more preferably contains a phenol resin. According to the configuration, it is possible to bring about advantages that the cured resin member can retain a shape thereof even when being burned, and as a result, the cured resin member can form a carbonized layer with high strength when being burned.

A total amount of the phenol resin, the epoxy resin, and the polyurethane relative to 100% by weight of the thermosetting resin is preferably not less than 50% by weight, more preferably not less than 65% by weight, more preferably not less than 80% by weight, and further preferably not less than 95% by weight. A total amount of the phenol resin, the epoxy resin, and the polyurethane relative to 100% by weight of the thermosetting resin may be 100% by weight, that is, the thermosetting resin may be constituted only by one or more selected from the group consisting of a phenol resin, an epoxy resin, and polyurethane. In a case where the total amount of the phenol resin, the epoxy resin, and the polyurethane in the thermosetting resin falls within the above-described range, it is possible to bring about advantages that the cured resin member can retain a shape thereof even when being burned, and as a result, the cured resin member can form a carbonized layer with high strength when being burned.

(Flame retardant)

The thermosetting resin composition preferably contains a flame retardant. According to the configuration, it is possible to bring about an advantage of further reducing a gross calorific value of an obtained flame retardant article.

The flame retardant is not limited to any particular one. Examples of the flame retardant include a phosphorus-based flame retardant, an organic flame retardant other than a phosphorus-based flame retardant, a boron-based inorganic compound, an inorganic flame retardant other than a boron-based inorganic compound, and the like.

Examples of the phosphorus-based flame retardant include polyphosphoric acid, polyphosphate, red phosphorus, condensed phosphoric ester, phosphoric ester, phosphoric acid metal salt, and the like. Examples of the polyphosphate include ammonium polyphosphate and sodium polyphosphate.

Examples of the organic flame retardant other than a phosphorus-based flame retardant include melamine phosphate, melamine sulfate, a novolac resin uncured product, and the like.

Examples of the boron-based inorganic compound include boric acid ($H_3BO_3$), borax ($Na_2B_4O_7O \cdot 10H_2O$), zinc borate, sodium polyborate, and the like.

Examples of the inorganic flame retardant other than a boron-based inorganic compound include aluminum hydroxide (Al(OH)s), magnesium hydroxide ($Mg(OH)_2$), silicon (Si), diatomite, silica ($SiO_2$), silicone, ceramic, graphite, carbon, carbon black, vermiculite, low melting point silicate glass, shirasu balloon which is a fine hollow glass sphere, mica which is a silicate mineral having a foil-shaped structure; alumina ($Al_2O_3$), white clay (such as kaolin or china clay), calcium carbonate ($CaCO_3$), chromium oxide (such as CraOs or CrOa), zeolite, perlite, tin (Sn), talc, titanium (Ti), carbon fiber, and the like.

The flame retardant preferably contains a phosphorus-based flame retardant, more preferably contains one or more selected from the group consisting of red phosphorus and polyphosphate, and further preferably contains ammonium polyphosphate. According to the configuration, it is possible to bring about an advantage of further reducing a gross calorific value of an obtained flame retardant article.

A contained amount of the flame retardant in the thermosetting resin composition is not particularly limited, and may be set as appropriate according to an assumed use environment of the flame retardant article and intended nonflammable property. A contained amount of the flame retardant in the thermosetting resin composition is, for example, preferably 0.1 parts by weight to 200.0 parts by weight, more preferably 2.0 parts by weight to 100.0 parts by weight, further preferably 5.0 parts by weight to 60.0 parts by weight, and particularly preferably 10.0 parts by weight to 40.0 parts by weight, relative to 100 parts by weight of the thermosetting resin.

(Curing agent)

The thermosetting resin composition may contain a curing agent for curing the thermosetting resin composition.

The curing agent is not limited to any particular one, and a conventionally known curing agent can be used. Examples of the curing agent include organic acids such as phenolsulfonic acid, toluenesulfonic acid (e.g., p-toluenesulfonic acid monohydrate), and benzenesulfonic acid. In view of solubility in the thermosetting resin and handleability, p-toluenesulfonic acid monohydrate is preferable.

A contained amount of the curing agent in the thermosetting resin composition is not particularly limited, and may be set as appropriate according to a type and an amount of the thermosetting resin and a curing method. A contained amount of the curing agent in the thermosetting resin composition is, for example, preferably 0.1 parts by weight to 100.0 parts by weight, more preferably 2.0 parts by weight to 60.0 parts by weight, further preferably 5.0 parts by weight to 40.0 parts by weight, and particularly preferably 8.0 parts by weight to 20.0 parts by weight, relative to 100 parts by weight of the thermosetting resin.

(Phenol-based compound)

The thermosetting resin composition preferably contains a phenol-based compound. According to the configuration, it is possible to bring about an advantage of further reducing a gross calorific value of an obtained flame retardant article. Here, the phenol-based compound contained in the thermosetting resin composition can function as an auxiliary flame retardant. Therefore, the "phenol resin" and the "phenolsulfonic acid" are each not regarded as a phenol-based compound contained in the thermosetting resin composition.

The phenol-based compound is not particularly limited, and a conventionally known phenol-based compound can be used. Examples of the phenol-based compound include monohydric phenol and polyhydric phenol. Examples of the monohydric phenol include phenol, cresol, trimethylphenol, thymol, xylenol, carvacrol, and p-tert-butylphenol. Examples of polyhydric phenol include tannins, flavones, catechins, anthocyanidines, and chalcones. Examples of the tannins include hydrolyzable tannin (e.g., tannic acid) and condensed tannin (e.g., persimmon tannin).

The phenol-based compound preferably contains monohydric phenol and/or polyhydric phenol, and more preferably is monohydric phenol and/or polyhydric phenol.

The phenol-based compound preferably contains polyhydric phenol having a high flame retardant effect, more preferably contains tannins, and further preferably contains tannic acid. According to the configuration, it is possible to bring about an advantage of still further reducing a gross calorific value of an obtained flame retardant article. The phenol-based compound may be polyhydric phenol, tannins, or tannic acid.

A contained amount of the phenol-based compound in the thermosetting resin composition is not particularly limited, and may be set as appropriate according to an assumed use environment of the flame retardant article and intended nonflammable property. A contained amount of the phenol-based compound in the thermosetting resin composition is, for example, preferably 0.1 parts by weight to 50.0 parts by weight, more preferably 1.0 parts by weight to 20.0 parts by weight, and particularly preferably 3.0 parts by weight to 10.0 parts by weight, relative to 100 parts by weight of the thermosetting resin.

(Other components)

The thermosetting resin composition may contain, in addition to the thermosetting resin, various other components other than the thermosetting resin, the flame retardant, the curing agent, and the phenol-based compound, as necessary within a range that does not impair the effects of an embodiment of the present invention. Examples of those other components include a stabilizer, a lubricant, an antistatic agent, a radiative heat transfer inhibitor, a plasticizing agent, a solvent, a colorant (pigment and dye), a weather resistant agent, a nucleating agent, and the like.

(Method for preparing thermosetting resin composition)

A method for preparing a thermosetting resin composition is not particularly limited. A thermosetting resin composition can be obtained by mixing (a) a thermosetting resin and (b) optionally, a flame retardant, a curing agent, a phenol-based compound, and/or other components with a conventionally known method. A device used for the mixing is not particularly limited, and examples thereof include a ribbon blender, homogenizer, a mixer, and the like.

(Method for preparing cured resin member)

By curing the thermosetting resin composition with a conventionally known method, it is possible to obtain a cured resin member. Examples of a means for curing the thermosetting resin composition include, but not particularly limited to, heating, heated water such as steam, and the like. A method for curing the thermosetting resin composition will be described in detail in a later-described method for producing a flame retardant article.

(2-3. Method for producing flame retardant article)

Examples of a method for producing a flame retardant article include the following methods (c1), (c2), (c3), and (c4):

(c1) A method in which a thermosetting resin composition is cured to obtain a cured resin member, and then the cured resin member is bonded (adhered or laminated) to an expanded member so that the cured resin member covers at least part of a surface of the expanded member;
(c2) A method in which, prior to curing a thermosetting resin composition, the thermosetting resin composition is applied to an expanded member (coating) such that an obtained cured resin member covers at least part of a surface of the expanded member, and then the thermosetting resin composition is cured (note that, in a case where the expanded member has a gap which a liquid substance can enter, the thermosetting resin composition may also enter the gap so that a part of the gap surface is also covered with a cured resin member);

(c3) A method in which an expanded member having a gap which a liquid substance can enter is submerged in a thermosetting resin composition before curing so that the thermosetting resin composition is impregnated into the expanded member, and then the thermosetting resin composition is cured; and

(c4) A method in which a thermosetting resin composition before curing is applied to a surface of an expanded member, the expanded member is subjected to an in-mold molding machine, and steam and pressure are applied to the expanded member by the in-mold molding machine to obtain a molded product at the same time as curing of the thermosetting resin composition.

In view of ease of operation, the methods described in (c2) and (c4) above are preferable.

The method for producing a flame retardant article in accordance with an embodiment of the present invention may be configured as follows:

A method for producing a flame retardant article, including one of the following steps 1 through 4;

step 1 of curing a thermosetting resin composition containing a thermosetting resin to obtain a cured resin member, then bonding the cured resin member to an expanded member so that the cured resin member covers at least part of a surface of the expanded member which is obtained by expanding a thermoplastic resin composition containing a thermoplastic resin;

step 2 of applying, prior to curing a thermosetting resin composition containing a thermosetting resin, the thermosetting resin composition to an expanded member obtained by expanding a thermoplastic resin composition containing a thermoplastic resin, then curing the thermosetting resin composition to obtain a cured resin member, and covering at least part of a surface of the expanded member with the cured resin member;

step 3 of submerging, prior to curing a thermosetting resin composition containing a thermosetting resin, an expanded member which is obtained by expanding a thermoplastic resin composition containing a thermoplastic resin and which has a gap that a liquid substance can enter in the thermosetting resin composition so that the thermosetting resin composition is impregnated into the expanded member, then curing the thermosetting resin composition to obtain a cured resin member, and covering at least part of a surface of the expanded member with the cured resin member;

step 4 of applying, prior to curing a thermosetting resin composition containing a thermosetting resin, the thermosetting resin composition to an expanded member obtained by expanding a thermoplastic resin composition containing a thermoplastic resin, then subjecting the expanded member to an in-mold molding machine and applying steam and pressure to the expanded member by the in-mold molding machine, curing the thermosetting resin composition to obtain a cured resin member, and covering at least part of a surface of the expanded member with the cured resin member;

the thermoplastic resin generates a residue when the thermoplastic resin is heated from 35°C to 600°C at a temperature increase rate of 10°C/minute under a nitrogen atmosphere; and

the cured resin member forms an oxygen insulating carbonized layer when being burned.

A method for applying a thermosetting resin composition to an expanded member (coating) is not particularly limited.

The following description will discuss a case in which the expanded member is expanded particles or a foamed molded product or an expanded product having a certain degree of size. In this case, by mixing and stirring a thermosetting resin composition with an expanded member, it is possible to obtain an expanded member in which at least part of a surface of the expanded member is coated with the thermosetting resin composition. A device for mixing and stirring the thermosetting resin composition with the expanded member is not particularly limited, and can be, for example, a ribbon blender, a mixer, a homogenizer, or the like. In this specification, the "expanded member in which at least part of a surface of the expanded member is coated with the thermosetting resin composition" is also referred to as a "thermosetting resin composition-containing expanded member".

The following description will discuss a case where the expanded member is a foamed molded product or an expanded product having a relatively large size. In this case, it is possible to obtain a thermosetting resin composition-containing expanded member by applying, to the expanded member, a thermosetting resin composition using a trowel, a roller, a rake, a caulking gun, a spray gun, or the like.

By curing the thermosetting resin composition in the thermosetting resin composition-containing expanded member, it is possible to obtain a flame retardant article in which a cured resin member is present in at least part of a surface of the expanded member.

A method for curing the thermosetting resin composition in the thermosetting resin composition-containing expanded member is not particularly limited, and a conventionally known curing method may be employed as appropriate, in accordance with a type and an amount of the thermosetting resin and a type and an amount of the curing agent. For example, the thermosetting resin composition-containing expanded member is left in an oven at 90°C to 130°C for 0.2 hours to 2.0 hours, and it is thus possible to obtain a flame retardant article in which the cured resin member is present in at least part of a surface of the expanded member.

[3. Application]

The present flame retardant article brings about an advantage that, even when a nonflammable surface material such as a metal foil (e.g., aluminum foil) is not included as a constituent element, the flame retardant article itself has a gross calorific value of 8.00 MJ/m$^2$ or less. Therefore, the present flame retardant article can be particularly suitably used as a light weight and low-cost building material. Note that it is also possible to use the present flame retardant article as a laminate in which the present flame retardant article is laminated with a nonflammable surface material such as a metal foil (e.g., aluminum foil). For example, the present flame retardant article can be particularly suitably used for various applications such as a heat insulating material for building, a ceiling material, a core material for a metal sandwich panel, a heat insulating material for a bathroom, and a heat insulating material for a hot-water tank.

An embodiment of the present invention may be configured as follows.

<1> A flame retardant article including: an expanded member which is obtained by expanding a thermoplastic resin composition containing a thermoplastic resin; and a cured resin member which is obtained by curing a thermosetting resin composition containing a thermosetting resin, the thermoplastic resin generating a residue when being heated from 35°C to 600°C at a temperature increase rate of 10°C/minute under a nitrogen atmosphere, the cured resin member forming an oxygen insulating carbonized layer when being burned, and the cured resin member being present in at least part of a surface of the expanded member.

<2> The flame retardant article described in <1>, in which: a residue ratio of the thermoplastic resin is 10% or more when the thermoplastic resin is heated from 35°C to 600°C at a temperature increase rate of 10°C/minute under a nitrogen atmosphere.

<3> The flame retardant article described in claim <1> or <2>, in which: the thermosetting resin composition further contains a flame retardant.

<4> The flame retardant article described in <3>, in which: the flame retardant includes a phosphorus-based flame retardant.

<5> The flame retardant article described in <3> or <4>, in which: an amount of the flame retardant is 0.1 parts by weight to 200.0 parts by weight, relative to 100 parts by weight of the thermosetting resin.

<6> The flame retardant article described in any one of <1> through <5>, in which: a gross calorific value is 8.00 MJ/m$^2$ or less when the flame retardant article is heated at a radiant heat intensity of 50 kW/m$^2$ for 20 minutes.

<7> The flame retardant article described in any one of <1> through <6>, in which: the thermosetting resin contains at least one selected from the group consisting of phenol-based resins, epoxy-based resins, and polyurethane-based resins.

<8> The flame retardant article described in any one of <1> through <7>, in which: the thermosetting resin composition further contains a phenol-based compound.

<9> The flame retardant article as set forth in claim 8, in which: the phenol-based compound is monohydric phenol and/or polyhydric phenol.

<10> The flame retardant article described in <8> or <9>, in which: an amount of the phenol-based compound is 0.1 parts by weight to 50.0 parts by weight, relative to 100 parts by weight of the thermosetting resin.

<11> The flame retardant article described in any one of <1> through <10>, in which: the thermoplastic resin contains a vinyl halide-based resin and/or an acrylonitrile-based resin.

<12> The flame retardant article described in any one of <1> through <11>, in which: the expanded member is constituted by expanded particles.

<13> The flame retardant article described in any one of <1> through <12>, in which: the thermoplastic resin composition further contains a radiative heat transfer inhibitor.

Examples

The following description will discuss an embodiment of the present invention in detail with reference to Examples and Comparative Examples. Note that the present invention is not limited to these examples. An embodiment of the present invention can be carried out while being altered as appropriate within the scope that is adaptable to the gist described before and later. The present invention also includes, in its technical scope, such embodiments obtained by altering the embodiment.

(Measurement method)

First, the following description will discuss methods for measuring various physical properties of a thermoplastic resin, an expanded member (chlorinated vinyl chloride-based expanded particles or polystyrene-based expanded particles), and a flame retardant article.

<Method for measuring residue ratio>

A residue ratio of the thermoplastic resin was determined using a simultaneous thermogravimetry/differential thermal analyzer (manufactured by Hitachi High-Tech Science Corporation: STA200RV). Specifically, the following operations were carried out: (1) a weigh of 5 mg to 8 mg of a thermoplastic resin was measured, and an obtained value was defined as a weight before heating; (2) the thermoplastic resin after weighing was placed into an aluminum pan; (3) while blowing nitrogen at a flow rate of 100 mL/min into the pan, the temperature in the pan was increased from 35°C to 600°C at 10°C/min; (4) after the temperature in the pan reached 600°C, the pan was cooled to room temperature, and a burned residue was taken out from the pan; (5) a weight of the burned residue taken out from the pan was measured, and an obtained value was used as a weight after heating; and (6) the weight after heating was divided by the weight before heating, an obtained value was multiplied by another 100, and an obtained value was used as a residue ratio (%). If no burned residue is present in the pan after burning, the residue ratio is 0%.

<Method for measuring expansion ratio>

Expanded particles having a weight $W_1$ (kg) were submerged in ethanol in a graduated cylinder, and a volume $V_1$ ($m^3$) of the expanded particles was determined from a degree of increase in liquid level in the graduated cylinder (submersion method). Next, from a true density of 1430 $kg/m^3$ of pellets of the chlorinated vinyl chloride-based resin, an expansion ratio of the chlorinated vinyl chloride-based expanded particles was determined by the following equation:

$$\text{Expansion ratio (times) of chlorinated vinyl chloride-based expanded particles} = 1430/(W_1/V_1).$$

From a true density of 1000 $kg/m^3$ of pellets of the polystyrene-based resin, an expansion ratio of the polystyrene-based expanded particles was determined by the following equation:

$$\text{Expansion ratio (times) of polystyrene-based expanded particles} = 1000/(W_1/V_1).$$

<Method for measuring gross calorific value>

The flame retardant article obtained in each of Examples was molded to have a size of 10 cm × 10 cm × 3 cm, and thus a foamed molded product was obtained.

With a method in conformity to ISO5660-1:2002, the obtained foamed molded product (flame retardant article) was heated at a radiant heat intensity of 50 $kW/m^2$ for 20 minutes, and a gross calorific value was measured. This measurement method is a test method specified as a method corresponding to the standard according to the cone calorimeter method at the General Building Research Corporation of Japan, which is a public institution provided for in Article 108(2) of the Order for Enforcement of the Building Standards Act.

(Raw material)

Raw materials used in Examples and Comparative Examples are as follows.

(Thermoplastic resin)

(A-1) Chlorinated vinyl chloride resin [produced by Kaneka Corporation, H716S; average polymerization degree: 600; chlorine content: 67.6% by weight]

(Thermosetting resin)

(B-1) Phenol resin (manufactured by DIC Corporation, Product name: GG-1448)

(Curing agent)

(C-1) p-toluenesulfonic acid monohydrate (manufactured by FUJIFILM Wako Pure Chemical Corporation)

(Flame retardant)

(D-1) Ammonium polyphosphate (manufactured by Clariant Chemicals, Product name: EXOLIT AP423)

(Phenol-based compound)

(E-1) Tannic acid (manufactured by FUJIFILM Wako Pure Chemical Corporation)

(Other components)

(F-1) Graphite (manufactured by Hayashi-Kasei Co., Ltd., Product name: SGP-40B).

(Example 1)

First, expandable chlorinated vinyl chloride-based resin particles were prepared as a thermoplastic resin composition.

<Preparation of expandable chlorinated vinyl chloride-based resin particles>

To 100 parts by weight of a chlorinated vinyl chloride resin (A-1), added were (a) 5 parts by weight of bis(2-ethylhexyl) phthalate as a plasticizer, (b) 13 parts by weight of a styrene-acrylonitrile copolymer (Blendex869 manufactured by Galata) and 5 parts by weight of chlorinated polyethylene having a chlorine content of 35% by weight as processing aids, (c) 3.5 parts by weight of a butyl tin mercapto-based stabilizer as a stabilizer, and (d) 3.2 parts by weight of each of an ester wax and a polyethylene wax as lubricants, and thus a compound was obtained. The compound thus obtained was blended to obtain a compound in which the components were uniformly dispersed. Then, the compound was supplied to an intermeshing co-rotating twin screw extruder, and the compound was melted and kneaded. Next, the melted and kneaded compound was extruded from the extruder, and cut to obtain pellets containing the components in the above-described blending ratio. The obtained pellets are pellets of a chlorinated vinyl chloride-based resin, and may be referred to as a base resin. The obtained pellets were fed to a twin screw extruder at a feed amount of 40 kg/hour, and the pellets were melted and kneaded. The twin screw extruder used was an intermeshing co-rotating twin screw extruder with a shaft diameter $\varphi$ of 40 mm.

In a halfway position of the intermeshing co-rotating twin screw extruder with a shaft diameter $\varphi$ of 40 mm, 8.8 parts by weight of normal pentane and 3.8 parts by weight of acetone were injected as blowing agents with respect to 100 parts by weight of the pellets. After that, the melted and kneaded product was cooled to a resin temperature of 165°C via a continuous pipe attached to the tip of the twin screw extruder, a single screw extruder, a gear pump, and a diverter valve. Then, through a die with 30 small holes each having a diameter of 1.0 mm and a land length of 3.5 mm attached downstream of the diverter valve and set to 220°C, the melted and kneaded product was extruded at a throughput rate of 45 kg/hour into pressurized circulating water at a temperature of 60°C and 1.3 MPa. At this time, the pressure at the tip of the extruder was 10 MPa, and the resin temperature of the melted product (that is, the temperature of the melted and kneaded product at the tip of the extruder) was 160°C. The melted and kneaded product thus extruded was cut into small particles with use of a rotary cutter which was in contact with the die. Next, the obtained small particles were subjected to a centrifugal dehydrator to remove water, and thus expandable chlorinated vinyl chloride-based resin particles (thermoplastic resin composition) having a particle weight of 5.5 mg were obtained. For the thermoplastic resin (chlorinated vinyl chloride resin (A-1)) used, a residue ratio (%) was measured with the foregoing method. The result is shown in Table 1.

Next, chlorinated vinyl chloride-based expanded particles, which are an expanded member, were prepared using expandable chlorinated vinyl chloride-based resin particles.

<Preparation of chlorinated vinyl chloride-based expanded particles>

Expandable chlorinated vinyl chloride-based resin particles (1000 g) were introduced into a pre-expanding machine (produced by Obiraki Industry Co., Ltd.). Steam at 0.18 MPa was introduced into the pre-expanding machine, and the expandable chlorinated vinyl chloride-based resin particles were expanded under a condition in which a temperature inside the pre-expanding machine was 90°C to 110°C, so that chlorinated vinyl chloride-based expanded particles of 30 times were obtained. Note that an expansion ratio of the chlorinated vinyl chloride-based expanded particles was measured with the foregoing method.

<Preparation of flame retardant article>

With 100 parts by weight of a phenol resin (B-1), 9.6 parts by weight of a curing agent (C-1), 17.9 parts by weight of a flame retardant (D-1), 5.4 parts by weight of a phenol-based compound (E-1), and 17.9 parts by weight of other components (F-1) were mixed (blended) to prepare a blended solution (i.e., a thermosetting resin composition). To the obtained blended solution, chlorinated vinyl chloride-based expanded particles were added in an amount of 38.1 parts by weight as an expanded member. The obtained mixture was stirred, and thus surfaces of chlorinated vinyl chloride-based expanded particles (expanded member) were coated with the blended solution (thermosetting resin composition). Thus, chlorinated vinyl chloride-based expanded particles (thermosetting resin composition-containing expanded member) were obtained in which most parts of the surfaces were coated with the blended solution (thermosetting resin composition). The obtained chlorinated vinyl chloride-based expanded particles (thermosetting resin composition-containing expanded member) were heated in an oven at 100°C for 1 hour. Thus, the blended solution (thermosetting resin composition) was cured, and a flame retardant article was obtained in which a cured resin member was present in a most part (at least 80% or more) of the surface of the expanded member. For the obtained flame retardant article, a gross calorific value was evaluated with the foregoing method. The result is shown in Table 1.

(Example 2)

With a method identical with that of Example 1 except that no other components (F-1) were used, a flame retardant article was obtained in which a cured resin member was present in a most part (at least 80% or more) of a surface of an expanded member. For the obtained flame retardant article, a gross calorific value was evaluated with the foregoing method. The result is shown in Table 1.

For each of the flame retardant articles in Example 1 and Example 2, after measuring a gross calorific value with the foregoing method (i.e., after burning), a state of the cured resin member was observed. As a result, it was found that a layer obtained by carbonization (i.e., carbonized layer) was formed. In addition, SEM images were obtained for the surface of the carbonized layer at five arbitrarily selected locations. Next, the number of cracks and holes with a longitudinal dimension of 100 $\mu$m or more was counted in a range of 2000 $\mu$m $\times$ 2000 $\mu$m in each of the SEM images, and an average number of cracks and holes of the five locations was five or less.

(Comparative Example 1)

<Method for preparing polystyrene-based expanded particles>

Expandable polystyrene-based resin particles were introduced into a pre-expanding machine (manufactured by Obiraki Industry Co., Ltd.), steam at 0.10 MPa was introduced into the pre-expanding machine, and polystyrene-based expanded particles, which are an expanded member, were obtained under a condition in which a temperature inside the pre-expanding machine was 90°C to 110°C. Here, an introduction amount of the expandable polystyrene-based resin particles into the pre-expanding machine was set to three conditions, i.e., 610 g, 370 g, and 260 g. Thus, polystyrene-based expanded particles were obtained which had expansion ratios of 30 times, 50 times, and 70 times, respectively.

<Method for preparing flame retardant article>

With a method identical with that of Example 1 except that polystyrene-based expanded particles having an expansion ratio of 30 times was used as an expanded member, a flame retardant article was obtained in which a cured resin member was present in a most part of a surface of the expanded member. For the obtained flame retardant article, a gross calorific value was evaluated with the foregoing method. The result is shown in Table 1.

(Comparative Example 2)

With a method identical with that of Example 1 except that polystyrene-based expanded particles having an expansion ratio of 50 times was used as an expanded member, a flame retardant article was obtained in which a cured resin member was present in a most part of a surface of the expanded member. For the obtained flame retardant article, a gross calorific value was evaluated with the foregoing method. The result is shown in Table 1.

(Comparative Example 3)

With a method identical with that of Example 1 except that polystyrene-based expanded particles having an expansion ratio of 70 times was used as an expanded member, a flame retardant article was obtained in which a cured resin member was present in a most part of a surface of the expanded member. For the obtained flame retardant article, a gross calorific value was evaluated with the foregoing method. The result is shown in Table 1.

In each of Comparative Examples 1 through 3, a residue ratio of the thermoplastic resin was calculated using a general polystyrene resin [manufactured by PS Japan Corporation, PS680].

[Table 1]

| | | Example 1 | Example 2 | Comparative Example 1 | Comparative Example 2 | Comparative Example 3 |
|---|---|---|---|---|---|---|
| Expanded member | Chlorinated vinyl chloride-based expanded particles (30 times) | 12.8 | 12.8 | | | |
| | Polystyrene-based expanded particles (30 times) | | | 9.0 | | |
| | Polystyrene-based expanded particles (50 times) | | | | 5.4 | |
| | Polystyrene-based expanded particles (70 times) | | | | | 3.8 |
| Residue ratio of thermoplastic resin used (%) | | 23 | 23 | 0 | 0 | 0 |
| Thermosetting resin | (B-1) Phenol resin | 33.6 | 33.6 | 33.6 | 33.6 | 33.6 |
| Curing agent | (C-1) p-toluenesulfonic acid monohydrate | 3.2 | 3.2 | 3.2 | 3.2 | 3.2 |
| Flame retardant | (D-1) Ammonium polyphosphate | 6.0 | 6.0 | 6.0 | 6.0 | 6.0 |
| Phenol-based compound | (E-1) Tannic acid | 1.8 | 1.8 | 1.8 | 1.8 | 1.8 |
| Other components | (F-1) Graphite | 6.0 | | 6.0 | 6.0 | 6.0 |
| Gross calorific value of flame retardant article ($MJ/m^2$) | | 6.94 | 7.06 | 47.33 | 25.73 | 17.28 |

Industrial Applicability

An embodiment of the present invention makes it possible to provide a flame retardant article having excellent flame retardancy. Therefore, the flame retardant article in accordance with an embodiment of the present invention can be particularly suitably used, for example, for various materials for building such as a heat insulating material for building, a ceiling material, a core material for a metal sandwich panel, a heat insulating material for a bathroom, and a heat insulating material for a hot-water tank.

**Claims**

1.  A flame retardant article comprising:

    an expanded member which is obtained by expanding a thermoplastic resin composition containing a thermoplastic resin; and
    a cured resin member which is obtained by curing a thermosetting resin composition containing a thermosetting resin,
    the thermoplastic resin generating a residue when being heated from 35°C to 600°C at a temperature increase rate of 10°C/minute under a nitrogen atmosphere,
    the cured resin member forming an oxygen insulating carbonized layer when being burned, and
    the cured resin member being present in at least part of a surface of the expanded member.

2.  The flame retardant article as set forth in claim 1, wherein:
    a residue ratio of the thermoplastic resin is 10% or more when the thermoplastic resin is heated from 35°C to 600°C at a temperature increase rate of 10°C/minute under a nitrogen atmosphere.

3.  The flame retardant article as set forth in claim 1 or 2, wherein:
    the thermosetting resin composition further contains a flame retardant.

4.  The flame retardant article as set forth in claim 3, wherein:
    the flame retardant includes a phosphorus-based flame retardant.

5.  The flame retardant article as set forth in claim 3 or 4, wherein:
    an amount of the flame retardant is 0.1 parts by weight to 200.0 parts by weight, relative to 100 parts by weight of the thermosetting resin.

6.  The flame retardant article as set forth in any one of claims 1 through 5, wherein:
    a gross calorific value is 8.00 MJ/m$^2$ or less when said flame retardant article is heated at a radiant heat intensity of 50 kW/m$^2$ for 20 minutes.

7.  The flame retardant article as set forth in any one of claims 1 through 6, wherein:
    the thermosetting resin contains at least one selected from the group consisting of phenol-based resins, epoxy-based resins, and polyurethane-based resins.

8.  The flame retardant article as set forth in any one of claims 1 through 7, wherein:
    the thermosetting resin composition further contains a phenol-based compound.

9.  The flame retardant article as set forth in claim 8, wherein:
    the phenol-based compound is monohydric phenol and/or polyhydric phenol.

10. The flame retardant article as set forth in claim 8 or 9, wherein:
    an amount of the phenol-based compound is 0.1 parts by weight to 50.0 parts by weight, relative to 100 parts by weight of the thermosetting resin.

11. The flame retardant article as set forth in any one of claims 1 through 10, wherein:
    the thermoplastic resin contains a vinyl halide-based resin and/or an acrylonitrile-based resin.

12. The flame retardant article as set forth in any one of claims 1 through 11, wherein:
    the expanded member is constituted by expanded particles.

13. The flame retardant article as set forth in any one of claims 1 through 12, wherein:
    the thermoplastic resin composition further contains a radiative heat transfer inhibitor.

## INTERNATIONAL SEARCH REPORT

| International application No. |
|---|
| **PCT/JP2022/019151** |

**A. CLASSIFICATION OF SUBJECT MATTER**

*B32B 5/18*(2006.01)i; *C08J 9/236*(2006.01)i; *C08J 9/42*(2006.01)i
FI: C08J9/236 CEZ; C08J9/42; B32B5/18

According to International Patent Classification (IPC) or to both national classification and IPC

**B. FIELDS SEARCHED**

Minimum documentation searched (classification system followed by classification symbols)
B32B5/18; C08J9/236; C08J9/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-336534 A (ASAHI ORGANIC CHEM IND CO LTD) 06 December 1994 (1994-12-06) claims, paragraphs [0007]-[0012], [0019], examples | 1-12 |
| Y | | 4-5, 8-10, 13 |
| X | JP 2001-342281 A (FUJIMORI, Takashi) 11 December 2001 (2001-12-11) claims, paragraphs [0009]-[0011], examples | 1-3, 6-7, 11-12 |
| Y | | 4-5, 8-10, 13 |
| X | WO 2006/043435 A1 (FUJIMORI, Takashi) 27 April 2006 (2006-04-27) claims, paragraphs [0031]-[0036], [0054]-[0084], examples | 1-7, 11-12 |
| Y | | 4-5, 8-10, 13 |
| Y | WO 2020/080148 A1 (ASAHI YUKIZAI CORPORATION) 23 April 2020 (2020-04-23) claims, paragraphs [0039]-[0045], examples | 8-10 |
| Y | JP 2020-63357 A (SUMITOMO BAKELITE CO) 23 April 2020 (2020-04-23) claims, paragraphs [0021]-[0022], examples | 8-10 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 July 2022** | **26 July 2022** |
| Name and mailing address of the ISA/JP | Authorized officer |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

<table>
<tr><td colspan="2">International application No.</td></tr>
<tr><td colspan="2">**PCT/JP2022/019151**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | JP 2019-56096 A (JSP CORP) 11 April 2019 (2019-04-11)<br>    claims, examples | 13 |

Form PCT/ISA/210 (second sheet) (January 2015)

## INTERNATIONAL SEARCH REPORT
### Information on patent family members

International application No.

**PCT/JP2022/019151**

| Patent document cited in search report | | | Publication date (day/month/year) | Patent family member(s) | Publication date (day/month/year) |
|---|---|---|---|---|---|
| JP | 6-336534 | A | 06 December 1994 | (Family: none) | |
| JP | 2001-342281 | A | 11 December 2001 | WO 2001/092387 A1 claims, paragraphs [0009]-[0011], examples | |
| WO | 2006/043435 | A1 | 27 April 2006 | CN 101068864 A claims, paragraphs [0031]-[0036], [0054]-[0084], examples | |
| WO | 2020/080148 | A1 | 23 April 2020 | EP 3868826 A1 claims, paragraphs [0039]-[0045], examples | |
| JP | 2020-63357 | A | 23 April 2020 | (Family: none) | |
| JP | 2019-56096 | A | 11 April 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006043435 A
- JP 2008120984 A
- JP 6135951 B